# EUROPEAN PATENT APPLICATION

(11) **EP 1 733 873 A1**
(43) Date of publication of application: **20.12.2006**
(21) Application number: 05105246.2
(22) Date of filing: 15.06.2005
(51) Int. Cl.: B32B 27/32

(54) **High clarity easy tear multilayer films**

(71) Applicant: TOTAL PETROCHEMICALS RESEARCH FELUY, 7181 Seneffe (Feluy) (BE)
(72) Inventor: Defrang, Michel, B-1420, Braine L'Alleud (BE)
(74) Representative: Leyder, Francis

(57) **Abstract**

The invention discloses high clarity multilayer films that are easy to tear in the transverse direction, wherein the core layer is made of a blend of from 5 to 95 wt % of crystal polystyrene and from 95 to 5 wt % of transparent styrene-butadiene block copolymer (5-40 wt % 1,3-butadiene, 60-95 wt % styrene) and the outer layers comprise from 85 to 100 wt % of a metallocene catalysed polyethylene (density:0.915-0.960 g/cm³, MI2:0.2 to 10 g/10min), said polyethylene being produced in the presence of a metallocene catalyst having the general formula:

R (THI)₂ MQ_{Z-2}

wherein
THI is a tetrahydrogenated indenyl group,
R is a substituted or unsubstituted C₁-C₄ alkylidene radical, a dialkyl germanium, a dialkyl silicon, a diaryl silicon, a di-alkoxysilane, a diphenoxysilane, or an alkyl phosphine or amine radical bridging two tetrahydrogenated indenyl groups,
Q is a hydrocarbyl radical such as aryl, alkyl, alkenyl, alkylaryl, or arylalkyl radical having from 1-20 carbon atoms, hydrocarboxy radical having 1-20 carbon atoms or halogen and can be the same or different from each other,
M is a group IVb, Vb or Vlb transition metal, and
Z is the valence of the transition metal,
and from 0% to 15 % by weight of either low density polyethylene or any other polyethylene catalysed by another metallocene than that of general formula R (THI)₂ MQ_{Z-2}. The invention also covers the process for producing such films as well as the use of the films.

## Description

The present invention relates to high clarity easy tear multilayer films, to the process for producing such films and to their uses.

Films are often used for wrapping over products such as canned goods, beverages bottles, carton bricks, packets of cigarettes or the like. Though convenient because they allow bundling products in a unitary pack, they can be difficult to open. Indeed, a tear initiated by a finger into the film tends to propagate in the extrusion direction (known as the machine direction) rather than in a direction (known as the transverse direction) perpendicular to that of the extrusion of the film. This is because the wrapping direction is in the machine direction. A tear initiated in the transverse direction has thus to be reinitiated several times in said direction before achieving the release of the wrapped article.

The Derwent abstract of JP 2001322212 A discloses a composite film comprising a sealing layer, an intermediate layer and an outermost layer. The intermediate layer may contain polystyrene and the outermost layer contains a polyethylene resin.

It is an object of the present invention to provide films, which are easy to tear in the transverse direction.

It is another object of the present invention to provide films, which have an adequate tear resistance in the machine direction.

It is a further object of the present invention to provide high clarity films.

Finally, it is an object of the present invention to provide films having a good impact resistance.

It would be advantageous if in addition these films would achieve good puncture resistance and good shrink and seal properties.

In the present invention, a film is defined as an extremely thin continuous sheet: the upper limit for thickness is of about 250 µm (Hawley's Condensed Chemical Dictionary, Twelfth Edition, Rev. by R.J.Lewis, Van Nostrand Reinhold Co., New York).

In the present invention, the core layer is defined as the central layer of a symmetrically built multilayer film having an uneven number of layers.

In the present invention, the outer layers are defined as the most external layers of a symmetrically built multilayer film having an uneven number of layers.

In the present invention, an inner layer is defined as any layer comprised between the outer layer and the core layer of a symmetrically built multilayer film having an uneven number of layers.

In the present invention, easy tear is defined as the stable propagation of a tear in transverse direction under a low tear force. This is a condition for the easy release of wrapped articles. By low tear force, it is meant a force of less than 15 N/mm.

In the present invention, a high clarity film is defined as a film having a haze of less than 7.5% when measured with the Byk-Gardner Hazegard® system according to the ASTM D 1003 method.

The present inventor has found that one or more of the objects of the invention are obtained with a symmetrically built multilayer film comprising:
i) a core layer made of a blend essentially consisting of from 5% to 95% by weight of crystal polystyrene and from 95% to 5% by weight of transparent styrene-butadiene block copolymer consisting of from 5% to 40% by weight of 1,3-butadiene monomer units and from 60% to 95% by weight of styrene monomer units,
ii) two outer layers comprising from 85% to 100% by weight of a metallocene catalysed polyethylene (mPE) having a density of from 0.915 to 0.960 g/cm³ and a melt index of from 0.2 to 10 g/10min when measured according to the method ASTM D 1238 condition 190°C/2.16 kg (MI₂), said polyethylene being produced in the presence of a metallocene catalyst having the general formula:

   R(THI)₂ MQ_{Z-2}

   wherein
   THI is a tetrahydrogenated indenyl group,
   R is a substituted or unsubstituted C₁-C₄ alkylidene radical, a dialkyl germanium, a dialkyl silicon, a diaryl silicon, a dialkoxysilane, a diphenoxysilane, or an alkyl phosphine or amine radical bridging two tetrahydrogenated indenyl groups,
   Q is a hydrocarbyl radical such as aryl, alkyl, alkenyl, alkylaryl, or arylalkyl radical having from 1-20 carbon atoms, hydrocarboxy radical having 1-20 carbon atoms or halogen and can be the same or different from each other,
   M is a group IVb, Vb or VIb transition metal, and
   Z is the valence of the transition metal,
and from 0% to 15% by weight of either low density polyethylene or any other polyethylene catalysed by another metallocene than that of general formula R (THI)₂ MQ_{Z-2}

The crystal polystyrene used in the present invention preferably has one or more of the following properties:
- a melt flow index (200°C/5 kg) ranging from 2.4 g/10min to 30 g/10min according to ISO 1133H,
- a tensile strength at break ranging from 35 MPa to 48 MPa according to ISO 527-2,
- an elongation at break ranging from 2% to 3% according to ISO 527-2,
- a tensile modulus ranging from 3100 MPa to 3200 MPa according to ISO 527-2,
- a flexural modulus of around 2900 MPa according to ISO 178,
- an unnotched charpy impact strength ranging from 6 kJ/m² to 8 kJ/m² according to ISO 179/1eU,
- a Rockwell hardness of L 70 according to ISO 2039-2.

The styrene-butadiene block copolymer used in the present invention is a transparent high styrenic styrene-butadiene block copolymer consisting of from 5% to 40 % by weight of 1,3-butadiene monomer units and from 60% to 95% by weight of styrene monomer units, preferably from 15% to 30% by weight of 1,3-butadiene monomer units and from 70% to 85% by weight of styrene monomer units.

In the present invention, the transparent styrene-butadiene block copolymer comprises at least a styrene homopolymer block and at least a 1,3-butadiene homopolymer block. It may also comprise one or more styrene-1,3-butadiene random copolymer block(s).

The styrene-butadiene block copolymer may be either linear or radial or a mixture of linear and radial and may be prepared by anionic polymerisation in a solvent using an alkali metal initiator. More details are given by H.L.Hsieh and R.P. Quirk in "Anionic polymerization", Marcel Dekker Inc. (1996).

Among the transparent styrene-butadiene block copolymers that can be used in the present invention, one can cite Finaclear® 550 copolymer, Styrolux® 648 D or the K Resins®.

According to one embodiment, the styrene-butadiene block copolymer used in the present invention have a transmittance of at least 90% and a haze of less than or equal to 3%, preferably a transmittance of about 91% and a haze of about 2% when both are measured according to ASTM D 1003 method.

According to another embodiment, the styrene-butadiene block copolymer used in the present invention preferably has one or more of the following properties:
- a flexural modulus ranging from 730 MPa to 1300 MPa according to ASTM D 790,
- a tensile modulus ranging from 770 MPa to 1400 MPa according to ASTM D 638,
- a tensile strength at yield ranging from 18 MPa to 28 MPa according to ASTM D 638,
- an elongation at break greater than 100% according to ASTM D 638,
- a shore hardness ranging from 60 shore D to 70 shore D according to ISO 868,
- an Unnotched Izod impact at 23°C ranging from 880 J/m to 1200 J/m, no break according to ASTM D 256.

The metallocene catalysed polyethylene used in the present invention (mPE) is produced with a metallocene catalyst having the general formula:

R(THI)₂ MQ_{Z-2}

wherein THI, R, Q, M and Z have the meaning stated above.

Preferably, M is a group IVb transition metal, more preferably M is zirconium.

Preferably, Q is an alkyl radical having from 1-4 carbon atoms or a halogen, more preferably Q is methyl or chlorine.

Preferably, R is a substituted or unsubstituted C₁-C₄ alkylidene radical, more preferably ethylidene or isopropylidene.

Preferably, the metallocene catalyst used is a bridged bis (tetrahydro-indenyl) zirconium dichloride, more preferably an ethylene bis (tetrahydro-indenyl) zirconium dichloride.

The metallocene catalyst is used in a polymerisation process according to any method known in the art.

In this invention, the density of the mPE ranges from 0.915 g/cm³ to 0.960 g/cm³, preferably from 0.925 g/cm³ to 0.950 g/cm³, more preferably from 0.927 g/cm³ to 0.947 g/cm³ when measured at 23°C using the ASTM D 1505 method.

As known in the art, the desired density is obtained by copolymerisation of ethylene with a suitable amount of a comonomer selected from the group consisting of propylene, 1-butene, 1-hexene, 1-octene and 4-methyl-1-pentene, the preferred comonomer being 1-butene, 1-hexene, 1-octene, the most preferable comonomer being 1-hexene.

The melt index of the mPE can be regulated by the amount of hydrogen injected in the reactor. The melt index (MI₂) of the mPE ranges from 0.2 g/10 min to 10 g/10 min.

The outer layers of the film of the invention are made either of mPE catalysed with the metallocene of general formula R (THI)₂ MQ_{Z-2} or of a blend of mPE with low density polyethylene (LDPE) or with any other polyethylene catalysed by another metallocene than that of general formula R (THI)₂ MQ_{Z-2}. When the mPE catalysed with the metallocene of general formula R (THI)₂ MQ_{Z-2} is used in blend, at least 85% by weight of said polyethylene is used, preferably at least 88% by weight is used.

LDPE is generally produced in autoclave or tubular reactors at pressure above 120 MPa with the use of free-radical initiators. The manufacture of the low density polyethylene used in the present invention is known in the art and is described for example in "Encyclopedia of Polymer Science and Engineering", second edition, Volume 6, on pages 404 to 410.

Standard additives such as antioxidants, antistatic, antifog, anti-UV and antiblocking or slip additives may also be added to the mPE or to the blends of mPE. Said additives may also be added to the crystal polystyrene and to the styrene-butadiene block copolymer. If desired, processing aids can also be added.

According to embodiments of the invention, compositions of the blends of mPE are obtained by preliminary dry blend.

The core layer of the film of the invention is made of a blend essentially consisting of from 5% to 95% by weight of crystal polystyrene and from 95% to 5% by weight of transparent styrene-butadiene block copolymer, preferably from 15% to 70% by weight of crystal polystyrene and from 85% to 30% by weight of styrene-butadiene block copolymer, more preferably from 30% to 50 % by weight of crystal polystyrene and from 70% to 50% by weight of styrene-butadiene block copolymer, said copolymer consisting of from 5% to 40% by weight of 1,3-butadiene monomer units and from 60% to 95 % by weight of styrene monomer units.

The film of the present invention has an uneven number of layers.

The film of the invention is a symmetrically built multilayer film.

According to one embodiment, the film has a three-layer structure A/C/A wherein layers A and C are respectively the outer layers and the core layer and wherein the outer layers of the film have the same composition.

According to another embodiment, the film is a five-layer film whose structure is A/B/C/B/A wherein layers A are the outer layers, layers B are the inner layers and layer C is the core layer and wherein the layers A and B have the same composition. In this embodiment, the inner layers B have the same composition as that of the outer layers A such as already described here above.

According to another embodiment, the film is a five-layer film whose structure is A/B/C/B/A wherein layers A are the outer layers, layers B are the inner layers and layer C is the core layer and wherein the compostion of the layers A and B is different. In this embodiment, the composition of the outer layers is that such as already described here above and the inner layers B are tie layers such as for example layers of ethylene vinyl acetate copolymer.

The thickness of the film and of the different layers may vary depending on the use of the film. For a three-layer film, the total thickness of the film may range from 15 µm to 100 µm, each outer layer representing from 10% to 45% of the total thickness of the film and the core layer representing from 10% to 80% of the total thickness of the film.

The total thickness of a five layer film may range from 25 µm to 100 µm, each outer layer having a thickness ranging from 10% to 30% of the total thickness of the film, each inner layer having a thickness ranging from 3% to 5% of the total thickness of the film and the core layer having a thickness ranging from 30% to 74% of the total thickness of the film.

The present invention further provides a process for producing high clarity easy tear films, said process comprising the steps of:
a) preparing a homogeneous blend essentially consisting of from 5% to 95% by weight of crystal polystyrene and from 95% to 5% by weight of transparent styrene-butadiene block copolymer consisting of from 5% to 40% by weight of 1,3-butadiene monomer units and from 60% to 95% by weight of styrene monomer units,
b) coextruding the blend of step a) between at least two outer layers comprising from 85% to 100% by weight of a metallocene catalysed polyethylene (mPE) having a density of from 0.915 to 0.960 g/cm³ and a melt index of from 0.2 to 10 g/10min when measured according to the method ASTM D 1238 condition 190°C/2.16 kg (MI₂), said polyethylene being produced in the presence of a metallocene catalyst having the general formula:

   R(THI)₂ MQ_{Z-2}

   wherein THI, R, Q, M and Z have the meaning stated above and from 0% to 15% by weight of either low density polyethylene or any other polyethylene catalysed by another metallocene than that of general formula

   R(THI)₂ MQ_{Z-2},
c) blowing or casting the coextrudate of step b) to prepare a blown or a cast multilayer film.

The films prepared according to the invention are high clarity films, which are easy to tear in the transverse direction while combining adequate tear resistance in the machine direction. The films prepared according to the invention have also a good impact resistance and good shrink and seal properties.

The high clarity easy tear films of the invention may be used for mailing packaging, food and hygiene packaging, shrink packaging.

### EXAMPLES:

### 1. Materials

The following resins were used for producing the films according to the invention:
* A metallocene polyethylene resin hereinafter "R1" having a density of 0.927 g/cm³ and a MI₂, of 0.9 g/10min prepared by using the bridged metallocene ethylene bis (4,5,6,7,tetrahydro-1-indenyl) zirconium dichloride. Said catalyst was activated and supported.
   The polymerisation of the resin R1 was carried out in a liquid-full slurry loop reactor in the presence of the activated and supported ethylene bis (4,5,6,7,tetrahydro-1-indenyl) zirconium dichloride. Ethylene was injected with 1-hexene. lsobutane was used as diluent.

The polymerisation conditions are indicated in table I.

**Table I**

| | Resin R1 |
|---|---|
| C2 feed (Ton/h) | 4.7 |
| C6/C2 feed ratio (kg/Ton) | 45 |
| H2/C2 feed ratio (g/Ton) | 42 |
| Iso C4 feed (Ton/h) | 3 |
| TIBAL conc. (ppm) | 20 |
| Temperature (°C) | 88 |

| | |
|---|---|
| C2 = ethylene C6 = 1-hexene Iso C4 = isobutane TIBAL = triisobutylaluminium | |

* A commercially available metallocene linear low-density polyethylene sold by ExxonMobil identified as Exceed 1018 hereinafter "R2". Exceed 1018 has a density of 0.918 g/cm³ and a MI₂ of 1 g/10min.
* A crystal polystyrene sold by Total Petrochemicals identified as crystal polystyrene 1340 hereinafter "PS". Crystal polystyrene 1340 is characterized by:
   - a melt flow index (200°C/5 kg) of 4 g/10min according to ISO 1133H;
   - an unnotched charpy impact strength of 8 kJ/m² according to ISO 179/1 eU,
   - a tensile strength at break of 44 MPa according to ISO 527-2,
   - an elongation at break of 2.5% according to ISO 527-2,
   - a tensile modulus of 3100 MPa according to ISO 527-2,
   - a flexural modulus of 2900 MPa according to ISO 178,
   - a Rockwell hardness of L70 according to ISO 2039-2.
* A transparent styrene-butadiene block copolymer, sold by Total Petrochemicals identified as Finaclear® 550 hereinafter "SBS" wherein the amount of styrene monomer units was 78% by weight and the amount of 1,3-butadiene monomer units was 22% by weight. Said copolymer is also characterized by:
   - a density at 23°C of 1.02 g/cm³ according to ASTM D 792-A,
   - a melt flow index at 200°C/5 kg of 15 g/10 min according to ASTM D 1238,
   - a transmittance of 90% according to ASTM D 1003,
   - a haze of 3% according to ASTM D 1003,
   - a flexural modulus of 1270 MPa according to ASTM D 790,
   - a tensile modulus of 1400 MPa according to ASTM D 638,
   - a tensile strength at yield of 24 MPa according to ASTM D 638,
   - an elongation at break greater than 200% according to ASTM D 638,
   - a shore hardness of 66 shore D according to ISO 868,
   - an unnotched lzod impact at 23°C of 880 J/m, no break according to ASTM D 256.

The antistatic and slip agents sold by Schulman identified respectively as Polybatch®VLA 55 and Polybatch®Ce 502(E) were used, each at the concentration of 1 weight percent in the outer layers of the films according to the invention (hereinafter F1 to F6) and in the core layer C of the comparative film CF1:

### 2. Films preparation

Six blown coextruded three-layer A/C/A films (hereinafter F1 to F6) according to the invention were prepared and characterised by:
i) one core layer (layer C) consisting of a blend of PS/SBS as defined in table II,
ii) two outer layers (layers A). Each outer layer has the same composition. The composition of the outer layers is defined in table II.

Three comparative blown coextruded three-layer A/C/A films (hereinafter CF1-CF3) were prepared and characterised by:
i) one core layer (layer C) made with either crystal PS (CF2) or SBS (CF3) or a blend of resins R1, R2 and antistatic and slip agents (CF1) as mentioned in table II,
ii) two outer layers (layers A). Each outer layer has the same composition. The composition of the outer layers is defined on page 16, table II.

The total thickness of each film and the thickness of the layers are given in table II.

All the films and comparative films were blown with a blow up ratio of 2.5 on a Kiefel line equipment characterised by a die diameter of 150 mm, and a die gap of 1.2 mm.

### 3. Films properties

Tear properties in machine direction and transverse direction hereinafter respectively MD and TD, optical properties, percentage of shrinkage in machine direction and transverse direction, impact property and puncture resistance are given in table II.

The force required to tear the film was measured with the Elmendorf tear test in the machine direction and in the transverse direction according to ASTM D 1922 method. Those forces are expressed in N/mm.

The gloss was measured at an angle of 45° with the Byk-Gardner micro-gloss reflectometer according to ASTM D 2457 method and the haze was measured with the Byk-Gardner Hazegard® system according to ASTM D 1003 method.

The impact resistance of the film was measured as Dart impact in g dropped from a height of 66 cm according to ASTM D 1709 method.

The percentage of shrinkage in machine direction and in transverse direction was measured according to two different methods:
1. ASTM D 2732-03 according to which the film is introduced in a bath of hot oil at 130°C during 2 minutes.
2. ISO 14616-97 according to which the film is set in an oven at about 130°C during about 17 seconds.

The puncture resistance defined by the force at break in N and the elongation at break in mm was measured according to ASTM D 5748-95 method.

The sealing property of the films was evaluated according to ASTM D 882-02 method at different temperatures and expressed as seal force in N. The values for the films and comparative films are given in table III.

Table II clearly shows that the films according to the invention are high clarity films that are easy to tear in the transverse direction while combining good shrink properties and puncture resistance. The films also present good sealing properties as shown in table III.

**Table II**

| | | F1 | F2 | F3 | F4 | F5 | F6 | CF1 | CF2 | CF3 |
|---|---|---|---|---|---|---|---|---|---|---|
| | Composition(wt %) | | | | | | | | | |
| Outer layers: A | R1 | 98 | 88 | 88 | 88 | 88 | 88 | 88 | 88 | 88 |
| | R2 | - | 10 | 10 | 10 | 10 | 10 | 10 | 10 | 10 |
| | Antistatic agent | 1 | 1 | 1 | 1 | 1 | 1 | 1 | 1 | 1 |
| | Slip agent | 1 | 1 | 1 | 1 | 1 | 1 | 1 | 1 | 1 |
| | | | | | | | | | | |
| Core Layer: C | PS | 30 | 15 | 30 | 30 | 30 | 70 | - | 100 | - |
| | SBS | 70 | 85 | 70 | 70 | 70 | 30 | - | - | 100 |
| | R1 | - | - | - | - | - | - | 88 | - | - |
| | R2 | - | - | - | - | - | - | 10 | - | - |
| | Antistatic agent | - | - | - | - | - | - | 1 | - | - |
| | Slip agent | - | - | - | - | - | - | 1 | - | - |
| | | | | | | | | | | |
| A/C/A thickness (%) | | 25/50/25 | 25/50/25 | 25/50/25 | 33/33/33 | 33/33/33 | 25/50/25 | 25/50/25 | 25/50/25 | 25/50/25 |
| Thickness of the film (um) | | 50 | 50 | 50 | 50 | 25 | 50 | 50 | 50 | 50 |
| | | | | | | | | | | |
| Elmendorf Tear:MD (N/mm) | | 110 | 29 | 56 | 173 | 139.9 | 15.1 | 54 | 21 | 65.5 |
| Elmendorf Tear:TD (N/mm) | | 10 | 9.4 | 7.6 | 8.6 | 7.4 | 14.1 | 196.2 | 25 | 22.6 |
| | | | | | | | | | | |
| Haze (%) | | 6 | 7 | 5.5 | 7.2 | 5.4 | 7.4 | 29.2 | 7 | 9.5 |
| Gloss (%) | | 71 | 70 | 77 | 68 | 72.8 | 70.8 | 30.6 | 72 | 59.8 |
| | | | | | | | | | | |
| Dart impact (g) | | 160 | 340 | n.m. | 252 | 145 | n.m. | 246 | 180 | 424 |
| | | | | | | | | | | |
| Shrinkage MD in oil (%) | | 61 | 47 | n.m. | 54 | 63 | 55 | 56 | 65 | 33 |
| Shrinkage TD in oil (%) | | 8 | 8 | n.m. | 11 | 9 | 22 | -4 | 25 | 3 |
| Shrinkage MD in oven (%) | | 50 | 48.7 | n.m. | 53.5 | 51.6 | 54.7 | 52.2 | 59.7 | 42.4 |
| Shrinkage TD in oven (%) | | 4 | 8.8 | n.m. | 6.1 | 0 | 23.6 | -7.8 | 24.4 | 1.8 |
| | | | | | | | | | | |
| Force at break (N) | | n.m | 51.6 | n.m. | 60.5 | n.m. | 60.6 | 47.2 | 70 | 47.5 |
| Elongation at break (mm) | | n.m | 41.4 | n.m. | 41.1 | n.m. | 24.8 | 53.4 | 18 | 45.1 |

| | | | | | | | | | | |
|---|---|---|---|---|---|---|---|---|---|---|
| n.m : not measured | | | | | | | | | | |

**Table III**

| | | F1 | F2 | F3 | F4 | F5 | F6 | CF1 | CF2 | CF3 |
|---|---|---|---|---|---|---|---|---|---|---|
| | Composition(wt %) | | | | | | | | | |
| Outer layers: A | R1 | 98 | 88 | 88 | 88 | 88 | 88 | 88 | 88 | 88 |
| | R2 | - | 10 | 10 | 10 | 10 | 10 | 10 | 10 | 10 |
| | Antistatic agent | 1 | 1 | 1 | 1 | 1 | 1 | 1 | 1 | 1 |
| | Slip agent | 1 | 1 | 1 | 1 | 1 | 1 | 1 | 1 | 1 |
| | | | | | | | | | | |
| Core layer: C | PS | 30 | 15 | 30 | 30 | 30 | 70 | - | 100 | - |
| | SBS | 70 | 85 | 70 | 70 | 70 | 30 | - | - | 100 |
| | R1 | - | - | - | - | - | | 88 | - | - |
| | R2 | - | - | - | - | - | | 10 | - | - |
| | Antistatic agent | - | - | - | - | - | | 1 | - | - |
| | Slip agent | - | - | - | - | - | | 1 | - | - |
| | | | | | | | | | | |
| A/C/A thickness (%) | | 25/50/25 | 25/50/25 | 25/50/25 | 33/33/33 | 33/33/33 | 25/50/25 | 25/50/25 | 25/50/25 | 25/50/25 |
| Thickness of the film (um) | | 50 | 50 | 50 | 50 | 25 | 50 | 50 | 50 | 50 |
| Sealing temperature | Seal force (N) | | | | | | | | | |
| 110°C | | 0.1 | 0.1 | n.m. | 0.08 | n.m. | 0.06 | 0.09 | 0.05 | 0.11 |
| 120°C | | 7.5 | 6.4 | n.m. | 8.2 | n.m. | 4.4 | 12.2 | 4 | 7.4 |
| 130°C | | 7 | 6.1 | n.m. | 8.0 | n.m. | 4.6 | 13.9 | 4.2 | 6.4 |
| 140°C | | 7.3 | 6.0 | n.m. | 10.2 | n.m. | 5.4 | 14.7 | 4.9 | 7.1 |
| 150°C | | 7.5 | 8.5 | n.m. | 8.1 | n.m. | 5.4 | 15.5 | 5 | 7.4 |
| 160°C | | 7.5 | 5.6 | n.m. | 8.0 | n.m. | 5.3 | 14.8 | 5.1 | 6.1 |
| 170°C | | 7.4 | 6.4 | n.m. | 8.9 | n.m. | 5.4 | 15.8 | 5 | 5.7 |
| 180°C | | 6.9 | 5.6 | n.m. | 8.6 | n.m. | 5.5 | 17.8 | 4.9 | 6.4 |

| | | | | | | | | | | |
|---|---|---|---|---|---|---|---|---|---|---|
| n.m : not measured | | | | | | | | | | |

## Claims

1. A symmetrically built multilayer film comprising:
i) a core layer made of a blend essentially consisting of from 5% to 95 % by weight of crystal polystyrene and from 95% to 5% by weight of transparent styrene-butadiene block copolymer consisting of from 5% to 40% by weight of 1,3-butadiene monomer units and from 60% to 95% by weight of styrene monomer units,
ii) two outer layers comprising from 85% to 100% by weight of a metallocene catalysed polyethylene having a density of from 0.915 to 0.960 g/cm³ and a melt index of from 0.2 to 10 g/10min when measured according to the method ASTM D 1238 condition 190°C/2.16 kg (MI₂), said polyethylene being produced in the presence of a metallocene catalyst having the general formula:
R (THI)₂ MQ_{Z-2}
wherein
THI is a tetrahydrogenated indenyl group,
R is a substituted or unsubstituted C₁-C₄ alkylidene radical, a dialkyl germanium, a dialkyl silicon, a diaryl silicon, a dialkoxysilane, a diphenoxysilane, or an alkyl phosphine or amine radical bridging two tetrahydrogenated indenyl groups,
Q is a hydrocarbyl radical such as aryl, alkyl, alkenyl, alkylaryl, or arylalkyl radical having from 1-20 carbon atoms, hydrocarboxy radical having 1-20 carbon atoms or halogen and can be the same or different from each other,
M is a group IVb, Vb or VIb transition metal, and
Z is the valence of the transition metal,
and from 0% to 15 % by weight of either low density polyethylene or any other polyethylene catalysed by another metallocene than that of general formula R (THI)₂ MQ_{Z-2}

2. A multilayer film according to claim 1 wherein the styrene-butadiene block copolymer has a transmittance of at least 90% and a haze of less than or equal to 3% when both are measured according to ASTM D 1003 method.

3. A film according to claim 1 **characterised in that** M is a group IVb transition metal.

4. A film according to claim 3 **characterised in that** M is zirconium.

5. A film according to claims 1 to 4 **characterised in that** R is a substituted or unsubstituted C1-C4 alkylidene radical.

6. A film according to any foregoing claims **characterised in that** the metallocene catalyst is a bridged bis (tetrahydro-indenyl) zirconium dichloride.

7. A process for producing the films according to claims 1 to 6 comprising the steps of:
a) preparing a homogeneous blend essentially consisting of from 5% to 95% by weight of crystal polystyrene and from 95% to 5% by weight of transparent styrene-butadiene block copolymer consisting of from 5% to 40% by weight of 1,3-butadiene monomer units and from 60% to 95% by weight of styrene monomer units,
b) coextruding the blend of step a) between at least two outer layers comprising from 85% to 100% by weight of a metallocene catalysed polyethylene having a density of from 0.915 to 0.960 g/cm³ and a melt index of from 0.2 to 10 g/10min when measured according to the method ASTM D 1238 condition 190°C/2.16 kg (MI₂), said polyethylene being produced in the presence of a metallocene catalyst having the general formula:
R (THI)₂ MQ_{Z-2}
wherein THI, R, Q, M and Z have the meaning as in claim 1 and from 0% to 15% by weight of either low density polyethylene or any other polyethylene catalysed by another metallocene than that of general formula R (THI)₂ MQ_{Z-2}
c) blowing or casting the coextrudate of step b) to prepare a blown or a cast multilayer film.

8. Use of the film according to claims 1 to 6 for mailing packaging, food packaging, hygiene packaging and shrink packaging.
